**Europäisches Patentamt**

**European Patent Office**

**Office européen des brevets**

(19)

(11) Publication number : **0 572 129 A1**

(12) # EUROPEAN PATENT APPLICATION

(21) Application number : **93303539.6**

(22) Date of filing : **07.05.93**

(51) Int. Cl.⁵ : **G01C 21/20**

(30) Priority : **08.05.92 JP 116444/92**

(43) Date of publication of application :
**01.12.93 Bulletin 93/48**

(84) Designated Contracting States :
**DE FR GB**

(71) Applicant : **PIONEER ELECTRONIC CORPORATION**
**No. 4-1, Meguro 1-chome**
**Meguro-ku Tokyo-to (JP)**

(72) Inventor : **Nishida, Junichi, c/o Pioneer Electronic Corp.**
**Kawagoe Works, No. 25-1 Aza-Nishicho**
**Oaza-Yamada, Kawagoe-shi, Saitama-ken (JP)**
Inventor : **Araki, Morio, c/o Pioneer Electronic Corp.**
**Kawagoe Works, No. 25-1 Aza-Nishicho**
**Oaza-Yamada, Kawagoe-shi, Saitama-ken (JP)**
Inventor : **Arakawa, Takeharu, c/o Pioneer Electronic Corp.**
**Kawagoe Works, No. 25-1 Aza-Nishicho**
**Oaza-Yamada, Kawagoe-shi, Saitama-ken (JP)**
Inventor : **Ishida, Tessho, c/o Pioneer Electronic Corp.**
**Kawagoe Works, No. 25-1 Aza-Nishicho**
**Oaza-Yamada, Kawagoe-shi, Saitama-ken (JP)**

Inventor : **Ayukai, Yasushiro, c/o Pioneer Electronic Corp.**
**Kawagoe Works, No. 25-1 Aza-Nishicho**
**Oaza-Yamada, Kawagoe-shi, Saitama-ken (JP)**
Inventor : **Baba, Toshiharu, c/o Pioneer Electronic Corp.**
**Kawagoe Works, No. 25-1 Aza-Nishicho**
**Oaza-Yamada, Kawagoe-shi, Saitama-ken (JP)**
Inventor : **Sakaguchi, Masahiko, c/o Pioneer Electronic Corp.**
**Kawagoe Works, No. 25-1 Aza-Nishicho**
**Oaza-Yamada, Kawagoe-shi, Saitama-ken (JP)**
Inventor : **Nobe, Kenichi, c/o Pioneer Electronic Corp.**
**Kawagoe Works, No. 25-1 Aza-Nishicho**
**Oaza-Yamada, Kawagoe-shi, Saitama-ken (JP)**
Inventor : **Kaneko, Michihiro, c/o Pioneer Electronic Corp.**
**Kawagoe Works, No. 25-1 Aza-Nishicho**
**Oaza-Yamada, Kawagoe-shi, Saitama-ken (JP)**
Inventor : **Shinohara, Jun, c/o Pioneer Electronic Corp.**
**Kawagoe Works, No. 25-1 Aza-Nishicho**
**Oaza-Yamada, Kawagoe-shi, Saitama-ken (JP)**

(74) Representative : **Brunner, Michael John et al**
**GILL JENNINGS & EVERY Broadgate House 7 Eldon Street**
**London EC2M 7LH (GB)**

(54) **Navigation device.**

(57) A navigation device includes measurement unit (1-4) for measuring current position of a vehicle on which the navigation device is mounted, input unit (14) for specifying travel points to be registered as route information, the travel points including a start point, a destination point, and route points positioned on a travel route from the start point to the destination point, memory unit (9) for storing the route information including positional information of each travel points and order information indicating the travel order of the route points, display unit (15) for displaying a route guide display showing a travel direction from a current position on a map on the basis of the route information, and register condition display unit (5, 15) for displaying a condition of the registered route information, the register condition display unit representing positions of the travel points on the basis of the positional information and travel orders of the travel points on the basis of the order information.

FIG.4

**EP 0 572 129 A1**

Field of the Invention:

This invention relates to a navigation device for assisting a driving of a vehicle such as an automotive vehicle by displaying a current position and a travel direction thereof, and more particularly relates to a navigation device having function of displaying a driving route to lead the vehicle on the basis of route information set in advance.

In a navigation device mounted on an automotive vehicle or the like, it is required to accurately and quickly measure the current vehicle position and the travel direction and display, on a display device for the driver, information relating to a map information around the current vehicle position, marks showing the current position and travel direction of the vehicle, and other information for satisfying user's demands.

One type of navigation device mounted on an automotive vehicle employs a route guide display function of storing positional information such as a start position, a destination position, and passing points on the way from the start point to the destination point (hereinafter referred to as "route point") in advance, setting the target points in accordance with the current vehicle position, and calculating and displaying a direction and a distance to the target points to the driver as route information, so as to lead the driver to the target position from the current vehicle position.

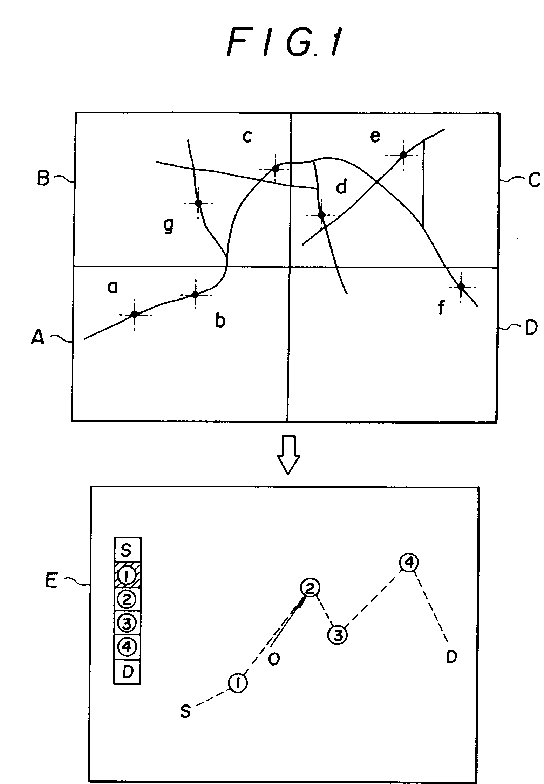

A register operation of the route guide display will now be now described with reference to FIG. 1. In FIG. 1, areas A, B, C and D respectively represent maps displayed as one map picture. In the register operation of the route guide display, first, the map A is displayed and the starting point "a" is set by the driver. Next, the map D is displayed and the destination point "f" is set. Then, the maps A, B and C in which route points exist are displayed and route points "b" to "e" on the route from the start point to the destination point are successively set in an order according to a passing order of the vehicle.

In the register operation, the navigation device reads out positional information including a latitude and a longitude of each point set by the driver from a map information and stores them. Instead of inputting positional information of each point on the map, the latitude and the longitude of each point may be directly inputted. Moreover, the start point may be automatically set to the current vehicle position when the destination point is set.

When the route points has been thus registered, the navigation device decides the point "b" as the target point, and calculates and displays the route, direction and distance to the point "b" after the vehicle has started the point "a". Further, after passing by the point "b", the navigation device decides the point "c" as the target point and calculates and displays the target point information to the point "c". In this manner, the navigation device successively displays the next target points every time when the vehicle passes by the route points defined the target point for assisting the driver.

When the vehicle runs through a plurality of points, in some cases, especially when the travelling time to the destination is limited, it would be required to recognize where the vehicle is positioned right now in the entire route or how long the rest travel distance to the destination is, in view of the rest available time. However, in the route guide display of the above described navigation device, although the starting point, the destination point and the route points positioned therebetween are registered, only information of the next target point is displayed in turn as mentioned above and information by which the driver can readily and immediately recognize the entire travel route and the current position is not displayed. Moreover, in the above navigation device, when a part of the route information which has been registered once is to be changed or other information is to be added to, all the route information has to be canceled and the register operation thereof has to be repeated from the beginning.

It is an object of the present invention to provide a navigation device which represents a route guide display to have the driver readily and immediately recognize the entire route and in which the registered route points can be easily changed, added or cancelled so as to more effectively assist the driver.

According to one aspect of the present invention, there is provided a navigation device including measurement unit for measuring current position of a vehicle on which the navigation device is mounted, input unit for specifying travel points to be registered as route information, the travel points including a start point, a destination point, and route points positioned on a travel route from the start point to the destination point, memory unit for storing the route information including positional information of each travel points and order information indicating the travel order of the route points, display unit for displaying a route guide display showing a travel direction from a current position on a map on the basis of the route information, and register condition display unit for displaying a condition of the registered route information, the register condition display unit representing positions of the travel points on the basis of the positional information and travel orders of the travel points on the basis of the order information.

According to the present invention, when the start point, the destination point and the route points are registered, the condition is displayed in such a deformed manner that each points are arranged in accordance with the positional information and the travel order information. Namely, information of the start point, the route points which indicate the travel order, and the destination point are connected by dotted lines showing the travel route. The information of the each points is so displayed that represented positions of the points corresponds to the real positional relation of the points on the map. As a result, a distance and positional relationship between the points can be easily recognized.

In addition, when the register condition display unit represents current position and target position on the basis of the route information, the current vehicle position in an entire travel route, a travelled distance and a rest travel distance are relatively recognized to achieve a time management in a driving. Further, when the route points are changed, the condition of the route points including the changed point is displayed together with the current position and the changed target point.

FIG. 1 is an explanatory view illustrating the present invention;

FIG. 2 shows the construction of the navigation device according to the present invention:

FIG. 3 is a flowchart showing a display operation of a "deform" drawing of the embodiment;

FIG. 4 is an explanatory view showing the display operation of the deformed picture of the embodiment;

FIG. 5 is a deformed picture showing the embodiment; and

FIG. 6 is a flowchart showing a route point change operation of the embodiment.

A preferred embodiment of the present invention will now be described with references to the drawings.

FIG. 1 shows a feature of the route display according to the present invention. Characters A, B, C and D represent areas displayed as one map picture. Character E represents an example of register condition display. Namely, when the travel points shown in the areas A to D are registered, the navigation device according to the present invention displays the positional relationship between the registered travel points as indicated by the character E. The details of the display operation
of the navigation device will be described below.

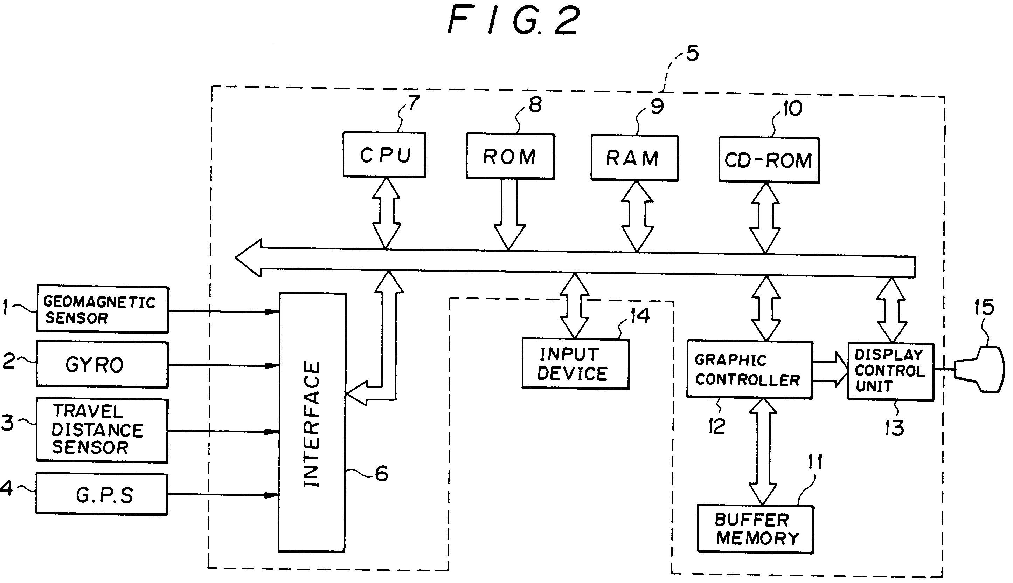

FIG. 2 shows a navigation device for an automotive vehicle according to an embodiment of the present invention. The navigation device includes a geomagnetic sensor 1 for detecting absolute angle direction data of the vehicle in accordance with the geomagnetism (earth magnetic field), a gyro 2 serving as an angle velocity sensor for detecting an angular velocity of the automotive vehicle due to a directional change of the vehicle and producing angular velocity data, a travel distance sensor 3 for detecting a condition of the vehicle by judging whether or not the vehicle is moving and simultaneously producing travelling speed data and travelling distance data of the vehicle, a GPS (Global Positioning System) device 4 for performing an arithmetic operation on the basis of receiving radio waves from a plurality of GPS satellites to generate data inclusive of a latitude, a longitude, an altitude and a direction of vehicle, a system controller 5 for processing an arithmetic operation and a control operation, an input device 14 for inputting a command to the system controller 5, and a display device such as a CRT or an LCD.

The system controller 5 includes an interface 6 for receiving output signals from the geomagnetic sensor 1, the gyro 2, the travel distance sensor 3 and the GPS device 4 and performing the analog-digital conversion or the like, a CPU 7 (Central Processing Unit) for processing an operation and a control or the like in accordance with a program, a ROM 8 (Read Only Memory) for storing various kinds of programs and necessary data in advance, a RAM 9 (Random Access Memory) in and from which data necessary for executing the programs is written and read, a recording medium 10 such as a CD-ROM, an IC card or the like for recording map information which is converted into digital form, a buffer memory 11, such as a V-RAM (video-RAM) serving as a frame buffer for temporarily storing image information converted in data which could be displayed in a real time manner, a graphic controller 12 for storing graphic data such as the map information transmitted in response to a command of the CPU 7 to the buffer memory 11 and outputting the stored data as image information, a display control circuit 13 for receiving the image information which is outputted from the graphic controller 12 and controlling an image of the display 12.

When the system controller 5 is turned on, the system controller 5 performs the following controls to display the current position. First, the system controller 5 reads out information for accessing map display information, display information of current vehicle position mark or the like from the recording medium 10 and stores the information in the RAM 9. Next, the system controller 5 reads out latitude data, longitude data and a travel direction data of the vehicle which serves as the current position information from the GPS device 4, reads out map data corresponding to the current vehicle position from the recording medium 10 to transmit it to the graphic controller 12, and displays a map on the display 15. Next, the current vehicle position mark is displayed at a position on the map which is decided in accordance with the current vehicle position information and the travel direction. Subsequently, the system controller 5 periodically reads out the current vehicle position information and the travel direction from the GPS device 4 and renews the display position and direction of the current position mark and the map on the basis of the periodically read out information if necessary. In addition, the system controller 5 periodically receives output data of the geomagnetic sensor 1, the gyro 2 and the travel distance sensor 3, calculates the current vehicle position and the travel direction by a predetermined calculation operation, and compares the calculated data with data from GPS device 4 to compensate for the detection error between them.

In addition, the navigation device according to this embodiment employs a route guide display function. The route guide display processing is as follows. The system controller 5 receives instruction for registering travel points. That is, first, a start point and a destination point are specified by the driver. Then, route points serving as passing points are successively specified in an order of passing by them. Then, the system controller 5 stores route information including the latitude and the longitude information of each point and the travel order information into RAM 9. When the vehicle travels from the start point, the route guide display is performed in such a manner that the registered route points are successively represented as target points, and direction and distance to each route target points are calculated to be displayed as the target point information one by one in travel order.

Moreover, the route guide display function includes a register condition display function which shows a deformed figure of the route information and a route change function for changing, cancelling the previously registered route points or adding new route points. The register condition display function and the route change function will be described hereinafter.

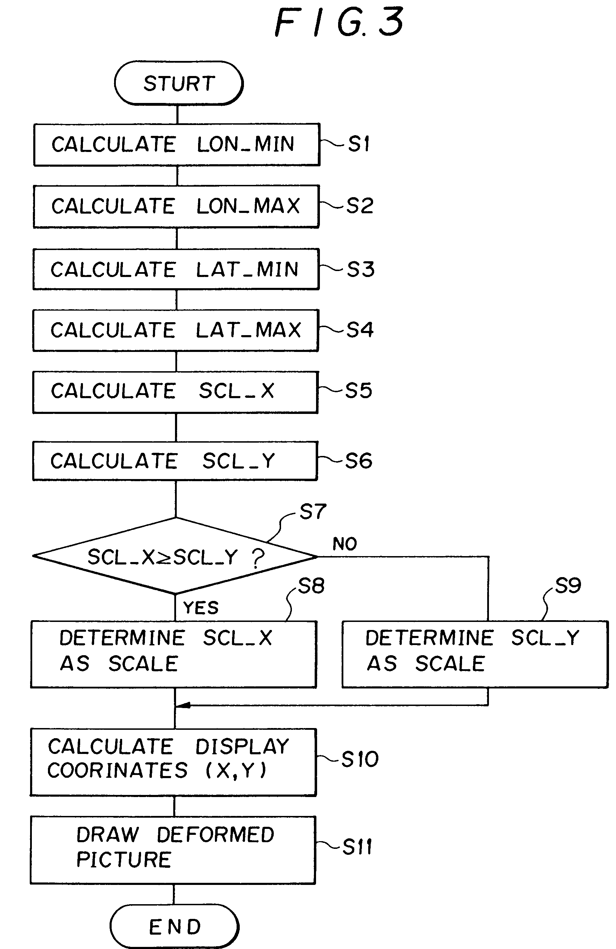

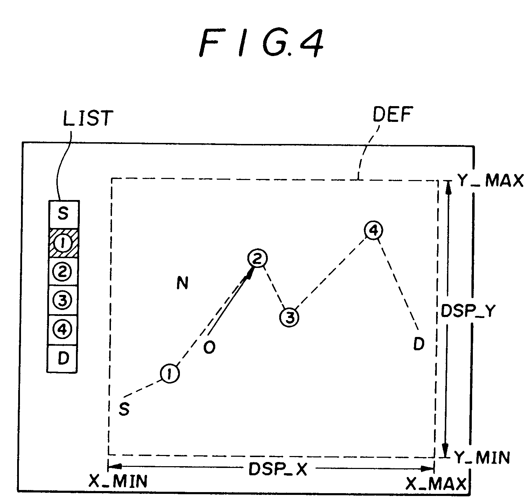

FIG. 3 is a flowchart showing the operation of the system controller 5 in the register condition display and FIG. 4 is a graph showing the operation of FIG. 3. In FIG. 4, each reference character represents as follows:

X_MIN: minimum value of the deformed picture area in the X direction;

X_MAX: maximum value of the deformed picture area in the X direction;

Y_MIN: minimum value of the deformed picture area in the Y direction;

Y_MAX: maximum value of the deformed picture area in the Y direction;

DSP_X: width of the deformed picture area in the X direction; and

DSP_Y: width of the deformed picture area in the Y direction.

The register condition display processing is described with reference to the flowchart shown in FIG. 3.

On receiving a command instructing the register condition display, the system controller 5 calculates minimum longitude LON_MIN, maximum longitude LON_MAX, minimum latitude LAT_MIN and maximum latitude LAT_MAX on the basis of positional information of the route points, the start point and the destination point previously registered and the current vehicle position in steps S1 - S4. Next, scale coefficients in the X direction SCL_X and the Y direction SCL_Y on the display are calculated according to the following equations in steps S5 and S6.

$$SCL\_X = DSP\_X / (LON\_MAX - LON\_MIN)$$
$$SCL\_Y = DSP\_Y / (LAT\_MAX - LAT\_MIN)$$

Further, the scale coefficients SCL_X and SCL_Y are compared with each other and a greater one is determined as scale coefficient SCALE in steps S7 - S10. Further, display coordinates (X, Y) of the route points, the start point, the destination point and the current vehicle position are calculated by the following equations in step S10, respectively.

$$X = (X\_MIN + Y\_MAX) / 2 + SCALE (LON\_ROT - (LON\_MIN + LON\_MAX) / 2)$$
$$Y = (Y\_MIN + Y\_MAX) / 2 + SCALE (LAT\_ROT - (LAT\_MIN + LAT\_MAX) / 2).$$

In these equations, LON_ROT and LAT_ROT respectively corresponds to the latitude and the longitude of a subject display point (the route points, the start point, the destination point, and the current vehicle point). The deformed picture is drawn in accordance with the display coordinates of the route points, the start and the destination points and the current vehicle point in step S11.

As shown in FIG. 4, in the deformed picture, the route points are numbered "① - ④" to represent the inputted order (i.e.. the travel order of the vehicle). The destination point is represented by the character "D" and the start point is represented by the character "S". The current vehicle point is represented by as the character "O". Dot lines connecting the points in the travel order are also displayed. The arrow shows a direction of the target point from the current vehicle point. Further, LIST showing the start point, the route points and the destination point used for the route change operation described below is represented on the left side of the deformed picture DEF.

The route change operation will now be described. The route change is executed in response to instructions of adding the route point or deleting the route point while the deformed picture described above is displayed.

Upon receiving instruction of registering or adding the route points, the system controller 5 monitors an input of a cursor movement command. When the cursor movement command is received, the system controller 5 changes the cursor position to the LIST side and waits for an input command indicating additional route point. The inputted additional route point corresponds to the point next to the point being designated by the cursor at that time. For example, in FIG. 4, if the additional route point is inputted while the cursor is positioned on the position of number "①" in the list, the added route point is inserted between the route points "①" and "②" Therefore, the number of the registered route points becomes five in total. After the inserting point is instructed in the above manner, the system controller 5 waits for an input specifying the position of the additional route point. The position of the additional route point is specified by designating the position in the map while the map being displayed, or by directly inputting position information of the latitude and the longitude of the additional route point. When the position of the additional route point is specified, the position information of the additional route point is stored in the RAM 9 in such a manner that the stored order of the position information of the additional route point conforms with the travel order of the route points.

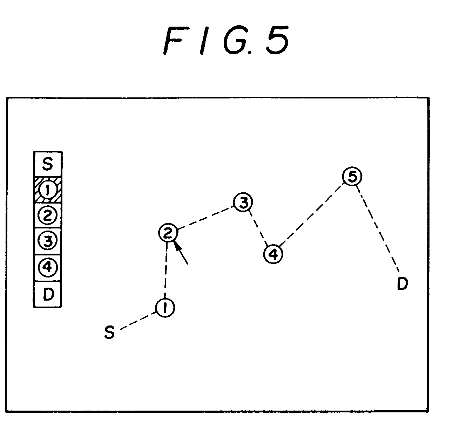

As a result, when the additional route point is inputted, the register condition is changed by processing the register condition display operation as shown in FIG. 3 to display a modified route register condition. For example, in FIG. 4, if the additional route point positioned at "N" is inputted between the route points "①" and "②", the added route point is inserted at the position shown in FIG. 5, and the modified route points to "① - ⑤" are displayed. On the other hand, in the deletion of the route point, in the same manner as the addition of the route point, the route information of the route point being selected is deleted from the LIST. Then, the register display operation is processed to display the modified register condition after the deletion of the route point is completed.

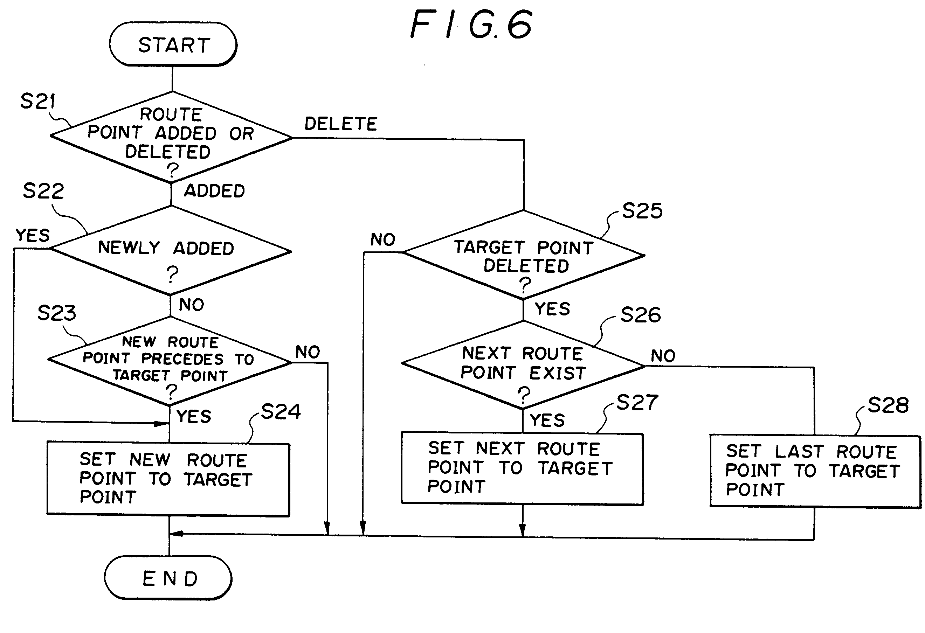

Next, the target point change process executed when the new route point is registered or the registered route point is deleted will be described with reference to FIG. 6.

First, it is discriminated whether a new route point is added or the route point is deleted in step S21. If it is discriminated that a new route point is added in a position preceding to the present target point in step S22, then it is discriminated whether the new route point is positioned before the present target point in step S23. If the discrimination in step S23 results in YES, the target point is changed to be the new route point. If the discrimination in step S23 results in NO, the process is terminated without renewal of the target point. On the other hand, if a target point is deleted, it is discriminated whether the deleted route point is the present target point or not in step S25. If the discrimination results in NO, the process is terminated without renewal of the target point. If the discrimination in step S25 results in YES, it is discriminated whether there further exists preceding route point in step S26. If the discrimination in step S26 results in YES, the next route point is set to the target point in step S27. If the discrimination in step S26 results in NO, the target point is changed to be the last route point in step S28.

For example, in FIG. 4, it is now assumed that the vehicle has passed by the route point "①" and the target point is set to the route point "②", and that the new route point is inputted at a position "N" which is positioned between the route points "①" and "②", the added new route point "N" is set to the target point and it is represented being referenced by the character "②" on the display with the modified route points "① - ⑤" as shown in FIG. 5. In addition, an arrow indicating the present target point is displayed.

With respect to the deformed picture of the embodiment described above, the display manner of each point is not limited to the feature shown in the figures. It is sufficient that the start point, the destination points, the route points, the current vehicle position can be recognized and the travel order can be understood. The display of the target point is of a type of the arrow extending from the current vehicle position in the embodiment. However, for example, the display of the target point may be distinguished by being colored or periodically flashed. Further, in the position selection of the addition or deletion of the route point, the selection is performed on the display of the list. However, it is also possible to specify the route points in the deformed picture by using the cursor.

According to the embodiment, in the route guide display, the deformed picture shows the respective route points on the route, the start point and the destination point being arranged at the positions specified by the real position information thereof and the travelling order thereof is clearly represented. Thus, in the case of the transportation to a plurality of delivery positions, the device according to the present invention is useful because delivery positions for the day is easily understood at a glance. Further, the distances between the respective delivery points can be roughly recognized so that it is useful for planning a driving program. Moreover, when the vehicle runs on the route, the deformed picture shows the current vehicle position in accordance with the real position thereof. At the same time, the target point is displayed. With this device, it is possible to know whereabouts in the overall route the vehicle is travelling, and the travelled distance and the remaining travel distance are roughly recognized, accordingly it is useful for time management of driving. Moreover, the addition or the deletion of the route point is easily operated and the display of the target point is automatically changed. Thus, the change of the route on driving is easily carried out.

## Claims

1. A navigation device characterized in that the device comprising:

measurement means (1-4) for measuring current position of a vehicle on which said navigation device is mounted;

input means (14) for specifying travel points to be registered as route information, said travel points including a start point, a destination point, and route points positioned on a travel route from the start point to the destination point;

memory means (9) for storing said route information including positional information of each travel points and order information indicating the travel order of the route points;

display means (15) for displaying a route guide display showing a travel direction from a current position on a map on the basis of the measured current position; and

register condition display means (5,15) for displaying a condition of the registered route information, said register condition display means representing positions of the travel points on the basis of the positional information and travel orders of the travel points on the basis of the order information.

2. A navigation device according to claim 1 characterized in that said register condition display means represents the positions and travel orders with respect to all of the registered travel points.

3. A navigation device according to claim 1, characterized in that said device further comprising route information change means (5) for receiving route change instruction and changing the route information in accordance with the route change instruction, characterized in that said register condition display means represents the positions and travel orders of the travel points on the basis of the changed route information.

4. A navigation device according to claim 1, characterized in that said register condition display means represents current position and target position on the basis of the measured current position and the route information.

5. A navigation device according to claim 4, characterized in that said register condition display means represents the positions and travel orders with respect to all of the registered travel points.

6. A navigation device according to claim 4, further comprising route information change means (5) for receiving route change instruction and changing the route information in accordance with the route change instruction, characterized in that said
register condition display means represents the positions and travel orders of the travel points on the basis of the changed route information.

7. A navigation device according to claim 4, characterized in that said target point is the route point nearest to the current position in the travel direction.

8. A method of displaying a travel route on a navigation device, characterized in that said method comprising the steps of:

measuring current position of a vehicle on which said navigation device is mounted;

specifying travel points to be registered as route information, said travel points including a start point, a destination point, and route points positioned on a travel route from the start point to the destination point;

storing said route information including positional information of each travel points and order information indicating the travel order of the route points;

displaying positions of the travel points on the basis of the positional information and travel orders of the travel points on the basis of the order information.

# F I G.1

# F I G. 2

EP 0 572 129 A1

# F I G. 3

```
           ┌─────────────┐
           │    STURT    │
           └──────┬──────┘
    ┌─────────────────────────┐
    │ CALCULATE  LON_MIN      │─── S1
    └────────────┬────────────┘
    ┌─────────────────────────┐
    │ CALCULATE  LON_MAX      │─── S2
    └────────────┬────────────┘
    ┌─────────────────────────┐
    │ CALCULATE  LAT_MIN      │─── S3
    └────────────┬────────────┘
    ┌─────────────────────────┐
    │ CALCULATE  LAT_MAX      │─── S4
    └────────────┬────────────┘
    ┌─────────────────────────┐
    │ CALCULATE  SCL_X        │─── S5
    └────────────┬────────────┘
    ┌─────────────────────────┐
    │ CALCULATE  SCL_Y        │─── S6
    └────────────┬────────────┘
```

S7

$SCL\_X \geq SCL\_Y$ ? — NO

YES — S8 / S9

```
┌─────────────────────┐     ┌─────────────────────┐
│ DETERMINE  SCL_X    │     │ DETERMINE  SCL_Y    │
│ AS  SCALE           │     │ AS  SCALE           │
└─────────────────────┘     └─────────────────────┘
```

```
┌─────────────────────────┐
│ CALCULATE  DISPLAY      │─── S10
│ COORINATES (X,Y)        │
└────────────┬────────────┘
┌─────────────────────────┐
│ DRAW  DEFORMED          │─── S11
│ PICTURE                 │
└────────────┬────────────┘
       ┌─────────────┐
       │    E N D    │
       └─────────────┘
```

# F I G. 4

# F I G. 5

FIG.6

START

S21 — ROUTE POINT ADDED OR DELETED ?

DELETE

ADDED

S22 — NEWLY ADDED ?

YES

NO

S23 — NEW ROUTE POINT PRECEDES TO TARGET POINT ?

NO

YES

S24 — SET NEW ROUTE POINT TO TARGET POINT

S25 — TARGET POINT DELETED ?

NO

YES

S26 — NEXT ROUTE POINT EXIST ?

NO

YES

S27 — SET NEXT ROUTE POINT TO TARGET POINT

S28 — SET LAST ROUTE POINT TO TARGET POINT

END

EP 0 572 129 A1

European Patent
Office

**EUROPEAN SEARCH REPORT**

Application Number

EP     93 30 3539

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 508 822 (PIONEER ELECTRONIC CORPORATION)<br>* abstract; claims 1,2; figure 5 *<br>* column 6, line 37 - column 7, line 31 *<br>--- | 1,4,8 | G01C21/20 |
| X | GB-A-2 120 387 (HONDA GIKEN KOGYO KABUSHIKI KAISHA)<br>* figures 9-12 *<br>* column 7, line 29 - column 8, line 112 *<br>--- | 1,2,4,5,<br>7,8 | |
| X | PATENT ABSTRACTS OF JAPAN<br>vol. 12, no. 178 (P-708)26 May 1988<br>& JP-A-62 289 721 ( MATSUSHITA ELECTRIC IND CO  LTD )<br>* abstract *<br><br>----- | 1,4,8 | |
| | | | **TECHNICAL FIELDS SEARCHED (Int. Cl.5 )** |
| | | | G01C |

The present search report has been drawn up for all claims

| Place of search | Date of completion of the search | Examiner |
|---|---|---|
| THE HAGUE | 09 SEPTEMBER 1993 | HUNT J.H. |

EPO FORM 1503 03.82 (P0401)